# EUROPÄISCHE PATENTANMELDUNG

(11) **EP 4 227 314 A1**
(43) Veröffentlichungstag der Anmeldung: **16.08.2023**
(21) Anmeldenummer: 22155937.0
(22) Anmeldetag: 09.02.2022
(51) Int. Cl.: C07F 7/18, C08K 5/5419, C10M 139/04

(54) **VERFAHREN ZUR HERSTELLUNG ORGANISCHER SILIZIUMVERBINDUNGEN**

(71) Anmelder: BASF SE, 67056 Ludwigshafen am Rhein (DE)
(72) Erfinder: Haas, Andreas, 67056 Ludwigshafen am Rhein (DE); Gorges, Jan Niclas, 67056 Ludwigshafen am Rhein (DE)
(74) Vertreter: BASF IP Association

(57) **Zusammenfassung**

Die vorliegende Erfindung betrifft ein Verfahren zur Herstellung von organischen Siliziumverbindungen, sowie die Verwendung der so erhaltenen Verbindungen.

## Beschreibung

Die vorliegende Erfindung betrifft ein Verfahren zur Herstellung von organischen Siliziumverbindungen, sowie die Verwendung der so erhaltenen Verbindungen.

Polysiloxane sind als Bestandteile von Hydraulikfüssigkeiten oder bestimmter Bremsflüssigkeiten bekannt, die den sogenannten DOT 5 Standard des Department of Traffic der USA erfüllen.

US 3814691 beschreibt die Herstellung solcher Organosilane durch Reaktion der entsprechenden Alkyl silyl chloride mit den gewünschten Alkoholen, bei denen es sich um Glykolether handeln kann.

Nachteilig an den Organosilanen, die durch diese Reaktion erhalten worden sind, ist jedoch der Restgehalt an Chloriden, was zu Korrosion in dem Hydrauliksystem führen kann, was zu Undichtigkeiten unter den im System herrschenden hohen Drücken führen kann.

EP 557027 A1 beschreibt ein mehrstufiges Verfahren, in dem zunächst ein Polysiloxan mit einem Alkohol in Gegenwart eines Katalysators umgesetzt, der Katalysator abgetrennt und anschließend mit einem Glykol und Glykolether umgesetzt wird.

Nachteilig an dieser Reaktionsführung ist, daß im ersten Reaktionsschritt ein hoher Anteil an hochmolekularem Rückstand gebildet wird, der in der Umsetzung mit dem Glykol und Glykolether nicht eingesetzt werden kann.

Es bestand die Aufgabe, ein Verfahren zur Herstellung von chlorfreien organischen Siliziumverbindungen zur Verfügung zu stellen, mit dem die Produkte in hoher Ausbeute und Reinheit erhalten werden können, so daß die Reaktionsgemische möglichst bereits in ihren Anwendungen eingesetzt werden können.

Die Aufgabe wurde gelöst durch ein Verfahren zur Herstellung von organischen Siliziumverbindungen der Formel (III)

(III) R¹ₓSi(-[-O-CH₂-CH₂-]ₙ-O-R³)₄₋ₓ

oder deren Gemische,

in dem man mindestens ein Alkoxy alkyl silan der Formel (la)

(Ia) R¹ₓSi(OR²)₄₋ₓ

und/oder ein cyclisches Siloxan der Formel (Ib)

(Ib) -(-SiR¹₂-O-)_{y}-

mit mindestens einem Alkoxyalkanol der Formel (II)

(II) R³-O-[-CH₂-CH₂-O-]ₙ-H

in Gegenwart mindestens einer Säure oder mindestens einer Base,
optional in einem Lösungsmittel
bei einer Temperatur von 0 bis 200 °C
umsetzt,
worin
R¹ Phenyl oder C₁-C₄-Alkyl, bevorzugt C₁-C₄-Alkyl, besonders bevorzugt Methyl, Ethyl oder n-Butyl, ganz besonders bevorzugt Methyl oder Ethyl,
R² C₁-C₄-Alkyl, besonders bevorzugt Methyl, Ethyl oder n-Butyl, ganz besonders bevorzugt Methyl oder Ethyl,
R³ C₁-C₄-Alkyl, besonders bevorzugt Methyl, Ethyl oder n-Butyl,
x für eine positive ganze Zahl 1, 2 oder 3,
y für eine positive ganze Zahl 3 oder 4, bevorzugt 3, und
n für eine positive ganze Zahl von 1 bis 5, bevorzugt von 2 bis 4, besonders bevorzugt 2 oder 3 und ganz besonders bevorzugt 3
bedeuten.

Bei den Ausgangsverbindungen der Formel (la)

(la) R¹ₓSi(OR²)₄₋ₓ

kann es sich um Mono alkoxy trialkyl silane (x = 3), Di alkoxy dialkyl silane (x = 2), Tri alkoxy monoalkyl silane (x = 1) oder Gemische daraus handeln. Handelt es sich bei dem Rest R¹ um Phenyl, so handelt es sich um die entsprechenden Mono alkoxy triphenyl silane, Di alkoxy diphenyl silane bzw. Tri alkoxy monophenyl silane.

Einfachheitshalber werden die Verbindungen der Formel (la) im Text als Alkoxy alkyl silane bezeichnet, auch wenn als Rest R¹ eine Phenylgruppe umfaßt ist.

Werden die Verbindungen der Formel (la) als Gemisch eingesetzt, so werden auch die organischen Siliziumverbindungen der Formel (III) als Gemisch erhalten. Das Verhältnis der Verbindungen der Formel (la) entspricht dabei in der Regel dem Verhältnis der Anteile der einzelnen Verbindungen der Formel (III) im Gemisch.

Bevorzugte Verbindungen der Formel (Ia) mit x = 1 sind Methyl trimethoxy silan, Methyl triethoxy silan, Methyl tri n-butoxy silan, Ethyl trimethoxy silan, Ethyl triethoxy silan, Ethyl tri n-butoxy silan, n-Propyl trimethoxy silan, n-Propyl triethoxy silan, n-Propyl tri n-butoxy silan, n-Butyl trimethoxy silan, n-Butyl triethoxy silan, n-Butyl tri n-butoxy silan, Phenyl trimethoxy silan, Phenyl triethoxy silan und Phenyl tri n-butoxy silan.

Besonders bevorzugt sind Methyl trimethoxy silan, Methyl triethoxy silan, Ethyl trimethoxy silan, Ethyl triethoxy silan, ganz besonders bevorzugt sind Methyl trimethoxy silan und Ethyl trimethoxy silan.

Bevorzugte Verbindungen der Formel (la) mit x = 2 sind Dimethyl dimethoxy silan, Dimethyl diethoxy silan, Dimethyl di n-butoxy silan, Diethyl dimethoxy silan, Diethyl diethoxy silan, Diethyl di n-butoxy silan, Di n-propyl dimethoxy silan, Di n-propyl diethoxy silan, Di n-propyl di n-butoxy silan, Di n-butyl dimethoxy silan, Di n-butyl diethoxy silan, Di n-b,utyl di n-butoxy silan, Diphenyl dimethoxy silan, Diphenyl diethoxy silan und Diphenyl di n-butoxy silan.

Besonders bevorzugt sind Dimethyl dimethoxy silan, Dimethyl diethoxy silan, Diethyl dimethoxy silan, Diethyl diethoxy silan, ganz besonders bevorzugt sind Dimethyl dimethoxy silan und Dimethyl diethoxy silan.

Bevorzugte Verbindungen der Formel (la) mit x = 3 sind Trimethyl monomethoxy silan, Trimethyl monoethoxy silan, Trimethyl mono n-butoxy silan, Triethyl monomethoxy silan, Triethyl monoethoxy silan, Triethyl mono n-butoxy silan, Tri n-propyl monomethoxy silan, Tri n-propyl monoethoxy silan, Tri n-propyl mono n-butoxy silan, Tri n-butyl monomethoxy silan, Tri n-butyl monoethoxy silan, Tri n-butyl mono n-butoxy silan, Tri phenyl monomethoxy silan, Tri phenyl monoethoxy silan und Tri phenyl mono n-butoxy silan.

Besonders bevorzugt sind Trimethyl monomethoxy silan, Trimethyl monoethoxy silan, Triethyl monomethoxy silan, Triethyl monoethoxy silan, ganz besonders bevorzugt sind Trimethyl monomethoxy silan und Triethyl monomethoxy silan.

In einer bevorzugten Ausführungsform beträgt in den eingesetzten Alkoxy alkyl silanen der Formel (la) x = 1.

In einer weiteren, besonders bevorzugten Ausführungsform beträgt in den eingesetzten Alkoxy alkyl silanen der Formel (la) x = 2, d.h. es werden reine Di alkoxy dialkyl silane als Verbindungen der Formel (la) eingesetzt.

In einer weiteren bevorzugten Ausführungsform werden Gemische von Alkoxy alkyl silanen der Formel (la) eingesetzt, besonders bevorzugt Gemische von Verbindungen mit x = 2 und zusätzlich mindestens eine weitere Verbindung mit x = 1 und/oder x = 3, ganz besonders bevorzugt diese Gemische, in denen die Verbindungen mit x = 2 mindestens 50 mol% am Gemisch ausmachen, insbesondere mindestens 75 mol%, speziell mindestens 85 mol%.

Es kann auch möglich sein, als Ausgangsverbindungen cyclische Siloxane der Formel (Ib)

(Ib) -(-SiR¹₂-O-)_{y}-

mit y = 3 oder 4, bevorzugt 3 einzusetzen.

Bevorzugt sind Hexamethylcyclotrisiloxan oder Octamethylcyclotetrasiloxan sowie deren Gemische. Denkbar, wenn auch weniger bevorzugt, sind Hexaethylcyclotrisiloxan und Octaethylcyclotetrasiloxan.

Für den Fall, daß als Wunschprodukt Alkoxyalkyloxysilane der Formel (III) mit x = 2, insbesondere mit R¹ = Methyl, erhalten werden sollen, stellt es eine bevorzugte Ausführungsform der vorliegenden Erfindung dar, cyclische Siloxane der Formel (Ib) mit mindestens einem Alkoxyalkanol der Formel (II) umzusetzen.

Möglich sind auch Gemische aus Alkoxy alkyl silanen der Formel (la) und cyclischen Siloxanen der Formel (Ib), besonders dann, wenn das gewünschte Produkt überwiegend aus Verbindungen mit x = 2 bestehen soll.

In dem mindestens einen Alkoxyalkanol der Formel (II)

(II) R³-O-[-CH₂-CH₂-O-]ₙ-H

ist R³ C₁-C₄-Alkyl, besonders bevorzugt Methyl, Ethyl oder n-Butyl und
n eine positive ganze Zahl von 1 bis 5, bevorzugt von 2 bis 4, besonders bevorzugt 2 oder 3 und ganz besonders bevorzugt 3.

Beispiele für derartige Alkoxyalkanole, die auch als Glykolmonoalkylether bezeichnet werden, sind Ethylenglykolmonomethylether, Ethylenglykolmonoethylether, Ethylenglykolmono n-butylether, Diethylenglykolmonomethylether, Diethylenglykolmonoethylether, Diethylenglykolmono n-butylether, Triethylenglykolmonomethylether, Triethylenglykolmonoethylether, Triethylenglykolmono n-butylether, Tetraethylenglykolmonomethylether, Tetraethylenglykolmonoethylether und Tetraethylenglykolmono n-butylether,

Bevorzugte Alkoxyalkanole sind Diethylenglykolmonomethylether, Diethylenglykolmonoethylether, Diethylenglykolmono n-butylether, Triethylenglykolmonomethylether, Triethylenglykolmonoethylether und Triethylenglykolmono n-butylether,

Besonders bevorzugt sind Diethylenglykolmonomethylether, Diethylenglykolmonoethylether, Triethylenglykolmonomethylether und Triethylenglykolmonoethylether und ganz besonders bevorzugt Triethylenglykolmonomethylether und Triethylenglykolmonoethylether.

Man kann die Alkoxyalkanole einzeln oder im Gemisch einsetzen, zumeist enthalten aufgereinigte Individuen der Alkoxyalkanole herstellungsbedingt noch untergeordnete Mengen an höher- und niedrigerhomologen Alkoxyalkanolen.

In einer bevorzugten Ausführungsform beträgt der Anteil an Alkoxyalkanolen mit n = 3 an der Gesamtmenge der eingebauten Alkoxyalkanole in Formel (III) mindestens 75 Gew%, besonders bevorzugt mindestens 85 Gew%, ganz besonders bevorzugt mindestens 90 und insbesondere mindestens 95 Gew%.

In einer weiteren bevorzugten Ausführungsform beträgt der Anteil an Alkoxyalkanolen mit n bis zu 2, bevorzugt mit n = 2 an der Gesamtmenge der eingebauten Alkoxyalkanole in Formel (III) nicht mehr als 20 Gew%, besonders bevorzugt nicht mehr als 10 und ganz besonders bevorzugt nicht mehr als 5 Gew%.

In einer weiteren bevorzugten Ausführungsform beträgt der Anteil an Alkoxyalkanolen mit n mindestens 4, bevorzugt mit n = 4 an der Gesamtmenge der eingebauten Alkoxyalkanole in Formel (III) nicht mehr als 15 Gew%, besonders bevorzugt nicht mehr als 5 und ganz besonders bevorzugt nicht mehr als 3 Gew%.

Dabei beträgt die Summe aller eingebauten Alkoxyalkanole mit n = 1 bis 5 in Formel (III) stets 100 Gew%.

Die Umsetzung der Edukte der Formeln (la) und/oder (Ib) mit den Alkoxyalkanolen der Formel (II) führt zu den organischen Siliziumverbindungen der Formel (III)

(III) R¹ₓSi(-[-O-CH₂-CH₂-]ₙ-O-R³)₄₋ₓ

worin die Werte für R¹, R³, n und x den Werten der eingesetzten Edukte im Wesentlichen entsprechen. Durch unvollständige Reaktion oder falls ein Gemisch von Alkoxyalkanolen der Formel (II) eingesetzt wird, in dem die einzelnen Individuen eine unterschiedliche Reaktivität aufweisen, können im Einzelfall die Einbauverhältnisse im Produkt der Formel (III) von dem in die Reaktion eingesetzten Verhältnis der Alkoxyalkanole der Formel (II) abweichen.

Die Ausgangsverbindungen der Formel (la) und/oder (Ib) sowie (II) werden miteinander in dem gewünschten Verhältnis vermischt und miteinander umgesetzt.

Dabei können die Ausgangsverbindungen vollständig miteinander vermischt und gemeinsam auf die angestrebte Reaktionstemperatur aufgeheizt werden. In einer bevorzugten Ausführungsform werden die Ausgangsverbindungen der Formel (la) und/oder (Ib) vorgelegt und das Alkoxyalkanol der Formel (II) in mehreren, beispielsweise zwei bis vier, bevorzugt zwei oder drei Portionen oder kontinuierlich über die Reaktionsdauer verteilt hinzugegeben. Nach vollständiger Zugabe des Alkoxyalkanols wird das Reaktionsgemisch noch weiter erhitzt, um die Reaktion zu vervollständigen.

In einer weiteren bevorzugten Ausführungsform wird der Alkoxyalkanol der Formel (II) vorgelegt und die Ausgangsverbindungen der Formel (la) und/oder (Ib) in mehreren, beispielsweise zwei bis vier, bevorzugt zwei oder drei Portionen oder kontinuierlich über die Reaktionsdauer verteilt hinzugegeben. Nach vollständiger Zugabe der Ausgangsverbindungen der Formel (la) und/oder (Ib) wird das Reaktionsgemisch noch weiter erhitzt, um die Reaktion zu vervollständigen. Diese Ausführungsform ist insbesondere dann bevorzugt, wenn die Ausgangsverbindungen der Formel (la) und/oder (Ib) unter den Reaktionsbedingungen eine deutliche Flüchtigkeit aufweisen und daher dem flüssigen Reaktionsgemisch signifikant entweichen.

Das mindestens eine Alkoxyalkanol der Formel (II) wird abhängig vom eingesetzten Ausgangsmaterial in verschiedenen molaren Verhältnissen eingesetzt
- Verwendung von (la) mit x = 1: Das Alkoxyalkanol (II) wird in einem molaren Verhältnis von mindestens 3:1 eingesetzt, wobei sich das molare Verhältnis auf das Verhältnis von freien Hydroxygruppen in Verbindung (II) zu Siliziumatomen in Verbindung (la) bezieht. Bevorzugt in einem Verhältnis von mindestens 3,1:1, besonders bevorzugt mindestens 3,2:1 bis 6:1, ganz besonders bevorzugt von mindestens 3,3:1 bis 5:1, insbesondere mindestens 3,5:1 bis 4:1.
- Verwendung von (la) mit x = 2 oder (Ib): Das Alkoxyalkanol (II) wird in einem molaren Verhältnis von mindestens 2:1 eingesetzt, wobei sich das molare Verhältnis auf das Verhältnis von freien Hydroxygruppen in Verbindung (II) zu Siliziumatomen in Verbindung (la) bzw. (Ib) bezieht. Bevorzugt in einem Verhältnis von mindestens 2,1:1, besonders bevorzugt mindestens 2,2:1 bis 5:1, ganz besonders bevorzugt von mindestens 2,3:1 bis 4:1, insbesondere mindestens 2,5:1 bis 3:1.
- Verwendung von (la) mit x = 3: Das Alkoxyalkanol (II) wird in einem molaren Verhältnis von mindestens 1:1 eingesetzt, wobei sich das molare Verhältnis auf das Verhältnis von freien Hydroxygruppen in Verbindung (II) zu Siliziumatomen in Verbindung (la) bezieht. Bevorzugt in einem Verhältnis von mindestens 1,1:1, besonders bevorzugt mindestens 1,2:1 bis 4:1, ganz besonders bevorzugt von mindestens 1,3:1 bis 3:1, insbesondere mindestens 1,5:1 bis 2:1.

Allgemein wird das Alkoxyalkanol (II) in einem molaren Verhältnis von mindestens 1 : 1 pro zu ersetzender Gruppe (R²O-) in der Verbindung der Formel (la) eingesetzt, bevorzugt mindestens 1,1 : 1, besonders bevorzugt mindestens 1,2 : 1 bis 4 : 1, ganz besonders bevorzugt von mindestens 1,3 : 1 bis 3 : 1, insbesondere mindestens 1,5 : 1 bis 2 : 1.

Werden Gemische von Verbindungen (la) mit unterschiedlichen Werten für x eingesetzt, so wird für dieses Gemisch der statistische Mittelwert x' der Alkylgruppen R¹ ermittelt, der sich aus den molaren Anteilen der einzelnen Individuen der Verbindungen und deren jeweiligen Wert für x für die Anzahl der Alkylgruppen im jeweiligen Individuum ergibt. Enthält das Gemisch noch mindestens cyclisches Siloxan der Formel (Ib), so wird dessen Anteil pro enthaltenem Siliziumatom mit x = 2 eingerechnet.

So ergibt sich beispielsweise für ein Gemisch von Verbindungen (la) mit 30 mol% x = 1, 60 mol% x = 2 und 10 mol% x = 3 eine statistische Funktionalität an Alkylgruppen R¹ von x' = 0,3 * 1 + 0,6 * 2 + 0,1 * 3 = 1,8. Daraus ergibt sich eine statistische Funktionalität von Alkoxygruppen (R²O-) bzw. Si-O-Bindungen von (4 - x') = 2,2.

Ein Gemisch von Verbindungen (la) mit 40 mol% x = 1, 40 mol% x = 2, 10 mol% x = 3 und 10 mol% Hexamethylcyclotrisiloxan ergibt eine statistische Funktionalität an Alkylgruppen R¹ von x' = 0,4 * 1 + 0,4 * 2 + 0,1 * 3 + 0,1 * 3 * 2 = 2,1. Entsprechend ergibt sich eine statistische Funktionalität an Si-O-Bindungen von 0,4 * 3 + 0,4 * 2 + 0,1 * 1 + 0,1 * 3 * 2 = 2,7.

Das Alkoxyalkanol (II) wird dann in einem mindestens äquimolaren Verhältnis bezogen auf Si-O-Bindungen eingesetzt, bevorzugt im mindestens 1,1-fachen Überschuß, besonders bevorzugt im 1,2 bis 4-fachen und ganz besonders bevorzugt im mindestens 1,3 bis 3-fachen Überschuß.

Es stellt eine bevorzugte Ausführungsform der vorliegenden Erfindung dar, den mindestens einen Alkoxyalkanol der Formel (II) in einem Überschuß einzusetzen und nach Abschluß der Reaktion im Produkt zu belassen. Auf diese Weise sind Mischungen aus organischen Siliziumverbindungen der Formel (III) und dem mindestens einen Alkoxyalkanol der Formel (II) erhältlich. Diese Mischungen sind bevorzugt im Wesentlichen zusammengesetzt wie folgt: 35 bis 70 Gew% organische Siliziumverbindung der Formel (III) : 65 bis 30 Gew% mindestens ein Alkoxyalkanol der Formel (II), besonders bevorzugt 40 bis 60 : 40 bis 60 Gew% und ganz besonders bevorzugt 45 bis 55 : 55 bis 45 Gew% der Verbindungen der Formel (III) : Verbindungen der Formel (II).

In untergeordneten Mengen können noch restliches Lösungsmittel sowie Reste an Säure oder Base enthalten sein, bevorzugt sind diese Reste nicht mehr als 5 Gew%, besonders bevorzugt nicht mehr als 3 Gew%, ganz besonders bevorzugt nicht mehr als 2 Gew% und insbesondere nicht mehr als 1 Gew%.

In einer Ausführungsform werden die Ausgangsverbindungen ohne weitere Lösungsmittel miteinander vermischt, was den Vorteil hat, daß nach Beendigung der Reaktion kein Lösungsmittel aus dem Reaktionsgemisch abgetrennt werden muß. Dies ist besonders dann bevorzugt, wenn die Viskosität der Ausgangsverbindungen und des Reaktionsgemisches unter den Bedingungen ausreichend niedrig ist um eine Förderung und Vermischung der Flüssigkeiten zu gewährleisten.

In einer weiteren, bevorzugten Ausführungsform wird die Reaktion in mindestens einem Lösungsmittel, bevorzugt genau einem Lösungsmittel durchgeführt. Bevorzugt ist das mindestens eine Lösungsmittel ausgewählt aus der Gruppe bestehend aus
- offenkettigen oder cyclischen Ethern,
- Alkanolen und
- Kohlenwasserstoffen.

Beispiele für offenkettige und cyclische Ether sind Diethylether, Di n-butylether, tert. Butyl methyl ether, tert. Butyl ethyl ether, tert. Amyl methyl ether, Diphenylether, Ethylenglykoldimethylether, Ethylenglykoldiethylether, Ethylenglykoldi n-butylether, Tetrahydrofuran und Dioxan.

Beispiele für Alkanole sind C₁- bis C₁₀-Alkanole, bevorzugt sind Methanol, Ethanol, isoPropanol, n-Propanol, n-Butanol, *iso*-Butanol, *sek*-Butanol, tert-Butanol, n-Hexanol, n-Heptanol, 2-Ethylhexanol, n-Octanol, 2-Propylheptanol und n-Decanol. Wenn ein Alkanol als Lösungsmittel eingesetzt wird, stellt es eine bevorzugte Ausführungsform dar, das Alkanol R²OH als Lösungsmittel zu verwenden.

Alkanole als Lösungsmittel sind lediglich dann bevorzugt, wenn als Base ein Metallalkoholat eingesetzt wird. In diesem Fall wird als Lösungsmittel bevorzugt der Alkanol eingesetzt der auch als Metallalkoholat verwendet wird. Ansonsten ist die Verwendung von Alkanolen als Lösungsmittel weniger bevorzugt.

Bevorzugt ist der Einsatz von Kohlenwasserstoffen als Lösungsmittel, Beispiele dafür sind solche, die überwiegend aliphatische, cycloaliphatische oder aromatische C₅- bis C₁₄-Kohlenwasserstoffe umfassen.

Bevorzugte aromatische Kohlenwasserstoff sind Toluol, o-, m- oder p-Xylol, Trimethylbenzolisomere, Tetramethylbenzolisomere, Ethylbenzol, Cumol, Tetrahydronaphthalin und solche enthaltende Gemische.

(Cyclo)aliphatische Kohlenwasserstoffe sind beispielsweise Decalin, alkyliertes Decalin und Isomerengemische von geradlinigen oder verzweigten Alkanen und/oder Cycloalkanen, besonders Cyclopentan, Cyclohexan, Methylcyclohexan und Cycloheptan.

Als Alkane bevorzugt sind n-Pentan, Pentan Isomerengemische, n-Hexan, Hexan Isomerengemische, n-Heptan, Heptan Isomerengemische, n-Octan, Octan Isomerengemische, Nonan Isomerengemische, n-Dekan und Dekan Isomerengemische.

Weitere Beispiele für Lösungsmittel sind die Solvesso^{®}-Marken der Firma ExxonMobil Chemical, besonders Solvesso^{®} 100 (CAS-Nr. 64742-95-6, überwiegend Cg und C₁₀-Aromaten, Siedebereich etwa 154 - 178 °C), 150 (Siedebereich etwa 182 - 207 °C) und 200 (CAS-Nr. 64742-94-5), sowie die Shellsol^{®}-Marken der Firma Shell, Caromax^{®} (z.B. Caromax^{®} 18) der Firma Petrochem Carless und Hydrosol der Firma DHC (z.B. als Hydrosol^{®} A 170). Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

Besonders bevorzugt handelt es sich dabei um einen Kohlenwasserstoff, der unter den Reaktionsbedingungen als Schleppmittel für Wasser, besonders bei Einsatz von cyclischen Siloxanen der Formel (Ib), bzw. für das Alkanol R²OH, besonders bei Einsatz von Alkoxy alkyl silanen der Formel (la), wirkt. Bevorzugt sind solche Kohlenwasserstoffe, die ein Heteroazeotrop bilden und nach destillativer Entfernung aus dem Reaktionsgemisch bei Abkühlung zwei Phasen ausbilden, von denen die Kohlenwasserstoffphase wieder in die Reaktion zurückgeführt wird.

Besonders bevorzugt ist das mindestens eine Lösungsmittel ausgewählt aus der Gruppe bestehend aus Cyclohexan, Methylcyclohexan, Benzol, Toluol, Xylol, Hexan und Heptan.

Wird ein Lösungsmittel eingesetzt, so beträgt die Konzentration der Reaktanden und der mindestens einen Säure oder Base in der Lösung in der Regel 10 bis 90 Gew%, bevorzugt 20 bis 80, besonders bevorzugt 30 bis 70 und ganz besonders bevorzugt 40 bis 60 Gew%.

Durch Abtrennen des Lösungsmittels, z.B. durch Destillation, nimmt die Konzentration im Verlauf der Reaktion zu.

Es ist zwar möglich die Umsetzung der Ausgangsverbindungen rein thermisch durchzuführen, erfindungsgemäß bevorzugt ist jedoch die Umsetzung in Gegenwart mindestens einer Säure oder mindestens einer Base.

Die mindestens eine Säure ist bevorzugt ausgewählt aus der Gruppe bestehend aus
- anorganischen Mineralsäuren,
- organische Sulfonsäuren, bevorzugt Alkyl- oder Arylsulfonsäuren und
- sauren lonentauschern.

Anorganische Mineralsäuren sind beispielsweise Salzsäure, Salpetersäure, Schwefelsäure, Schweflige Säure, Phosphorsäure und Phosphorige Säure, unter diesen bevorzugt sind Schwefelsäure und Phosphorsäure, besonders bevorzugt ist Schwefelsäure.

Organische Sulfonsäuren sind beispielsweise Methansulfonsäure, Ethansulfonsäure, Trifluormethansulfonsäure, Cyclododecansulfonsäure, Benzolsulfonsäure, para-Toluolsulfonsäure und ein bis dreifach C₆- C₂₀-alkylsubstituierte Benzolsulfonsäuren, wie Nonylbenzolsulfonsäure, Dodecylbenzolsulfonsäure, Tetradecylbenzolsulfonsäure, Hexadecylbenzolsulfonsäure oder Octadecylbenzolsulfonsäure.

Saure lonentauscher sind zumeist solche, die Carboxyl- oder Sulfonsäuregruppen, bevorzugt Sulfonsäuregruppen in einer Polymermatrix, häufig eine Polymermatrix auf Basis Polystyrol tragen.

Im Falle der Durchführung in Gegenwart mindestens einer Base ist diese bevorzugt ausgewählt aus der Gruppe bestehend aus
- (Erd)alkalimetall oxiden oder -hydroxiden, bevorzugt Alkalimetall hydroxide,
- (Erd)alkalimetall carbonaten oder -hydrogencarbonaten
- Metall alkoholaten, bevorzugt Metall alkoholaten des Alkanols R²OH und
- tertiären Aminen.

Beispiele für (Erd)alkalimetall oxide und -hydroxide sind Kalziumoxid, Magnesiumoxid, Kalziumhydroxid, Magnesiumhydroxid, Natriumhydroxid, Kaliumhydroxid und Lithiumhydroxid, unter diesen sind die Alkalimetall hydroxide bevorzugt, besonders bevorzugt sind Natriumhydroxid und Kaliumhydroxid, ganz besonders bevorzugt Natriumhydroxid.

Beispiele für (Erd)alkalimetall carbonate und -hydrogencarbonate sind Kalziumcarbonat, Magnesiumcarbonat, Lithiumcarbonat, Natriumcarbonat, Kaliumcarbonat, Kalziumhydrogencarbonat, Magnesiumhydrogencarbonat, Lithiumhydrogencarbonat, Natriumhydrogencarbonat und Kaliumhydrogencarbonat.

Unter diesen sind die Carbonate bevorzugt, besonders bevorzugt die Alkalimetallcarbonate, besonders bevorzugt Natriumcarbonat, Natriumhydrogencarbonat und Kaliumcarbonat, ganz besonders bevorzugt sind Natriumcarbonat und Natriumhydrogencarbonat.

In einer bevorzugten Ausführungsform der vorliegenden Erfindung werden Metallalkoholate als Basen eingesetzt, bevorzugt Metall C₁- bis C₄-Alkoholate, besonders bevorzugt Metall -methanolat, -ethanolat, -*iso*-propanolat, -n-propanolat, -n-butanolat und -tert-Butanolat, ganz besonders bevorzugt das Metallalkoholat des Alkanols R²OH.

Die Metalle in den Metallalkoholaten sind bevorzugt Lithium, Natrium, Kalium, Titan, Aluminium, Zirkonium, Eisen, Kobalt, Nickel und Zink, besonders bevorzugt Lithium, Natrium, Kalium, Aluminium und Titan.

Ganz besonders bevorzugt sind Natrium methanolat, Natrium ethanolat, Kalium methanolat, Kalium ethanolat, Kalium tert. butanolat und Titan tetra(isopropanolat).

Als tertiäre Amine können beispielsweise Trimethylamin, Triethylamin, Tri-n-butylamin, Tri-n-hexylamin, Tri-n-octylamin, Dimethylethanolamin, Triethanolamin, N-Methylmorpholin, N-Methylpiperidin, N-Methylpyrrolidin, Pyridin, Dimethylaminopyridin, Dimethylanilin, 1,4-Diazabicyclo[2.2.2]octan (Triethylendiamin, DABCO), 1,5-Diazabicyclo[4.3.0]non-5-en (DBN), 1,8-Diazabicyclo[5.4.0]undec-7-en (DBU).

Bevorzugt sind Tri-n-butylamin, Pyridin, Dimethylaminopyridin, 1,4-Diazabicyclo[2.2.2]octan (Triethylendiamin, DABCO), 1,5-Diazabicyclo[4.3.0]non-5-en (DBN) und 1,8-Diazabicyclo[5.4.0]undec-7-en (DBU).

Die mindestens eine Säure oder mindestens eine Base werden in der Regel in Mengen von 5 bis 30 mol% bezogen auf Siliziumatome in Verbindung (la) und (Ib) eingesetzt, bevorzugt 10 bis 25 mol%.

Die Reaktionstemperatur beträgt von 0 (Null) bis 200 °C, bevorzugt von 40 bis 190, besonders bevorzugt von 50 bis 180, ganz besonders bevorzugt von 60 bis 170 und insbesondere von 70 bis 160 °C statt. In einer bevorzugten Ausführungsform wird die Reaktionstemperatur im Verlauf der Reaktion gesteigert, beispielsweise um bis zu 80 °C, bevorzugt um bis zu 60 und besonders bevorzugt um bis zu 50 °C. Dies ist besonders dann bevorzugt, wenn die Minderkomponente der Ausgangsverbindungen zu mindestens 50, bevorzugt zu mindestens 70 und besonders bevorzugt zu mindestens 80 % umgesetzt ist, so daß der Umsatz durch die Erhöhung der Temperatur vervollständigt wird.

Es kann sinnvoll sein, die Reaktion bei Überdruck durchzuführen, beispielsweise bis zu 20, bevorzugt bis zu 15 und besonders bevorzugt bis zu 10 bar Überdruck. Dies ist besonders dann bevorzugt, wenn mindestens eine der Ausgangsverbindungen einen Siedepunkt aufweist, der etwa 30, bevorzugt 20 °C unter der Reaktionstemperatur liegt.

Liegen die Siedepunkte der Ausgangsverbindungen ausreichend weit von der angestrebten Reaktionstemperatur entfernt, so wird die Reaktion bevorzugt bei normalem Druck durchgeführt.

Zur Entfernung von im Reaktionsverlauf entstehenden flüchtigen Bestandteilen sowie optional eingesetztem Lösungsmittel kann bevorzugt ein Unterdrucks von mindestens 100 mbar unter Umgebungsdruck angelegt werden, besonders bevorzugt mindestens 200 mbar, ganz besonders bevorzugt mindestens 500 mbar unter Umgebungsdruck, bevorzugt wird der Unterdruck im Verlauf der Reaktion und Abtrennung der flüchtigen Bestandteile auf einen Enddruck von 200 mbar, bevorzugt 100, besonders bevorzugt 50 und ganz besonders bevorzugt 20 mbar gesteigert.

Abgetrenntes Lösungsmittel, das gegebenenfalls flüchtige Säuren oder Basen enthält, kann anschließend für eine nächste Reaktionsdurchführung wiederverwendet werden.

In einer bevorzugten Ausführungsform werden im Reaktionsverlauf entstehende flüchtige Bestandteile sowie optional eingesetztes Lösungsmittel durch Strippen mit einem inerten Gas entfernt, bevorzugt durch Durchleiten durch das Reaktionsgemisch.

Unter den Reaktionsbedingungen inerte Gase können beispielsweise Stickstoff, Argon, Kohlenstoffdioxid oder sauerstoffabgereicherte Luft mit einem Sauerstoffgehalt unter 10 Vol%, bevorzugt unter 8, besonders bevorzugt unter 5 Vol% sein, bevorzugt Stickstoff oder Argon, besonders bevorzugt Stickstoff.

Das Inertgas kann durch Tauchrohre, Ringleitungen, Düsen oder Fritten eingeleitet werden.

Wenn der gewünschte Umsatz erreicht oder nahezu erreicht ist und ein Lösungsmittel eingesetzt worden ist, kann dieses aus dem Reaktionsgemisch abgetrennt werden, bevorzugt durch Destillation oder Rektifikation, optional unterstützt durch Strippen mit einem inerten Gas. Dies kann bevorzugt durch Erhöhung der Temperatur des Reaktionsgemischs und/oder Absenkung des Drucks erfolgen, bevorzugt durch eine Kombination dieser beiden Maßnahmen. Durch diese Temperaturerhöhung wird der Umsatz in der Regel vervollständigt.

Eine einstufige Destillation kann entweder aus dem Reaktor heraus oder durch Durchleiten durch ein geeignetes Aggregat, wie Rotationsverdampfer, Dünnschichtverdampfer, Fallfilmverdampfer, Wischblattverdampfer, Sambay-Verdampfer usw. und Kombinationen davon, erfolgen.

Eine Rektifikation erfolgt bevorzugt über dem Reaktor aufgesetzte Destillationskolonnen, wie Bodenkolonnen, die gewünschtenfalls mit Einbauten, Ventilen, Seitenabzügen usw. ausgerüstet sein können. Die eingesetzte Destillationskolonne bzw. die Destillationskolonnen können in einer an sich bekannten Ausführung realisiert werden (siehe z. B. Sattler, Thermische Trennverfahren, 2. Auflage 1995, Weinheim, S. 135ff; Perry's Chemical Engineers Handbook, 7. Auflage 1997, New York, Section 13). Die eingesetzten Destillationskolonnen können trennwirksame Einbauten enthalten, wie Trennböden, z. B. Lochböden, Glockenböden oder Ventilböden, geordnete Packungen, z. B. Blech- oder Gewebepackungen, oder regellose Schüttungen von Füllkörpern. In der Regel sind bis zu 20, bevorzugt bis zu 10 theoretische Trennböden ausreichend.

Es stellt eine besondere Ausführungsform der vorliegenden Erfindung dar, die Reaktion in Form einer Reaktivdestillation durchzuführen.

Dabei findet die Reaktion der Ausgangsverbindungen zu einem wesentlichen Teil oder sogar vollständig auf den trennwirksamen Einbauten der Trennkolonne statt. Da der als Produkt gebildete Alkanol R²OH in der Regel die leichtsiedenste Komponente im Reaktionssystem ist, wird diese direkt nach der Bildung sofort destillativ aus dem Reaktionsgleichgewicht entfernt und die Reaktion kann somit unter relativ milden Bedingungen fortschreiten. Die Anzahl an theoretischen Trennstufen wird dabei so gewählt, daß die anderen niedrigsiedenden Verbindungen, in der Regel das Alkoxy alkyl silan der Formel (la) sowie das cyclische Siloxan der Formel (Ib) im Reaktionsgemisch verbleiben.

In einer Ausführungsform der Reaktivdestillation sind die trennwirksamen Einbauten in diesem Fall mit einer Säure oder eine Base beschichtet, um so die Reaktion voranzutreiben. Dies hat den Vorteil, daß keine wesentliche Reaktion stattfindet, soweit sich das Reaktionsgemisch nicht in direktem Kontakt mit den trennwirksamen Einbauten befindet. Dies bewirkt auch eine Zurückdrängung von Neben- oder Folgereaktionen, die durch die Anwesenheit von Säure oder Base gefördert werden.

Um den Kontakt der Reaktanden mit den trennwirksamen Einbauten zu erhöhen wird ein Teil der Destillationsvorlage entnommen und als Rücklauf auf die Einbauten gegeben, optional ergänzt um frisches, unumgesetztes Alkoxyalkanol der Formel (II).

In einer weiteren Ausführungsform der Reaktivdestillation wird die mindestens eine Säure oder mindestens eine Base zusammen mit dem Rücklauf auf die trennwirksamen Einbauten gegeben. Dies hat den Vorteil, daß die Säure bzw. Base sich auch in der Destillationsvorlage befindet und die Reaktion nicht nur an den trennwirksamen Einbauten, sondern auch in der Vorlage erfolgt, was die Raum-Zeit-Ausbeute erhöht.

In der Regel sind das mindestens eine Alkoxyalkanol der Formel (II) sowie das Produkt der Formel (III) die höchstsiedenden Komponenten im Reaktionsgemisch, wohingegen die Edukte der Formeln (la) und/oder (Ib) sowie das entstehende Alkanol R²OH niedrigersiedend sind. Während der Reaktion sollen die Edukte der Formeln (la) und/oder (Ib) der Reaktion zur Verfügung stehen, also im Reaktionsgemisch gehalten werden, wohingegen das entstehende Alkanol R²OH bevorzugt aus dem Reaktionsgemisch abgetrennt wird. Daher stellt es eine bevorzugte Ausführungsform dar, Reaktionsbedingungen und Komponenten so zu wählen, daß das Alkanol R²OH die leichtestsiedende Verbindung im System ist und die Siedepunkte der Edukte der Formeln (la) und/oder (Ib) zwischen denen von R²OH und Alkoxyalkanol der Formel (II) sowie Produkt der Formel (III) liegen.

In diesem Fall stellt es eine besonders bevorzugte Ausführungsform dar, die Reaktion in einem Reaktor mit aufgesetzter Rektifikationskolonne durchzuführen, deren Trennleistung ausreichend das Alkanol R²OH als Leichtsieder am Kolonnenkopf abzutrennen, wohingegen die höher als R²OH siedenden Komponenten im Reaktionsgemisch, besonders die Edukte der Formeln (la) und/oder (Ib) als Kolonnenrücklauf in das Reaktionsgemisch zurückgeführt werden. Enthält das Reaktionsgemisch zusätzlich ein Lösungsmittel, so kann dieses bevorzugt ebenfalls als Rücklauf in das Reaktionsgemisch rückgeführt werden oder auch zusammen mit dem Alkanol R²OH als Kopfprodukt abgenommen werden. Falls Lösungsmittel und Alkanol bzw. gebildetes Wasser nach Kondensation ein zweiphasiges Gemisch bilden, so kann nach Trennung der Phasen die Lösungsmittelphase wieder in das Reaktionsgemisch rückgeführt werden.

Dies Ausführungsform ist besonders dann bevorzugt, wenn als Alkoxy alkyl silan der Formel (la) Dimethoxy dimethyl silan (Siedepunkt 81 °C) oder Dimethoxy diethyl silan eingesetzt wird. In diesem Fall wird Methanol mit einem Siedepunkt von 65 °C bei Normaldruck freigesetzt, was von Dimethoxy dimethyl silan per Rektifikation getrennt oder zumindest abgereichert werden kann.

Dies Ausführungsform ist besonders dann bevorzugt, wenn als Alkoxy alkyl silan der Formel (la) Diethoxy dimethyl silan (Siedepunkt 113 - 114 °C) oder Diethoxy diethyl silan (Siedepunkt ca. 159 °C) eingesetzt wird. In diesem Fall wird Ethanol mit einem Siedepunkt von 78 °C bei Normaldruck freigesetzt, was sowohl von Diethoxy dimethyl silan als auch von Diethoxy diethyl silan per Rektifikation getrennt oder zumindest abgereichert werden kann.

Dies Ausführungsform ist besonders dann bevorzugt, wenn als cyclisches Siloxan der Formel (Ib) Hexamethyl cyclotrisiloxan (Siedepunkt 134 °C) oder Octamethyl cyclotetrasiloxan (Siedepunkt 175 - 176 °C) eingesetzt wird. In diesem Fall wird Wasser mit einem Siedepunkt von 100 °C bei Normaldruck freigesetzt, was per Rektifikation getrennt oder zumindest abgereichert werden kann.

Nach Beendigung der Reaktion werden dann unumgesetzte Edukte der Formeln (la) und/oder (Ib) sowie eventuell enthaltenes Lösungsmittel destillativ aus dem Reaktionsgemisch entfernt.

Nach Abtrennung des Lösungsmittels wird das Reaktionsgemisch aufgereinigt.

Wenn der gewünschte Umsatz erreicht und kein Lösungsmittel eingesetzt worden ist, wird die Reaktion in der Regel durch Abkühlen gestoppt und das Reaktionsgemisch aufgereinigt. Dabei wird das Reaktionsgemisch bei einer Temperatur belassen, bei der es eine für die Aufreinigung ausreichend niedrige Viskosität aufweist.

Durch die Aufreinigung wird die mindestens eine Säure oder Base nach Beendigung der Reaktion sowie gegebenenfalls noch enthaltenes Lösungsmittel abgetrennt durch mindestens einen der Aufreinigungsschritte ausgewählt aus der Gruppe bestehend aus
- Filtration,
- Membranfiltration,
- Umkehrosmose,
- Sorption an mindestens einem anorganischen Metalloxid oder Aktivkohle und
- Kontakt mit mindestens einem sauren, basischen oder gemischten lonentauscher.

Die ersten drei Techniken sind dem Fachmann an sich bekannt.

Die Sorption kann an anorganischen Materialien erfolgen, beispielsweise Kieselgel, Silikate, Aluminiumoxid, Zeolithe, Diatomeenerde, gemischte Aluminium/Siliziumoxide, sowie Kalziumcarbonate und -oxide, oder an Aktiv- oder Holzkohle.

Für die Abtrennung von Säuren werden bevorzugt basische Materialien eingesetzt und umgekehrt.

Die Abtrennung von Säuren erfolgt bevorzugt über Durchleiten des Reaktionsgemisches über basische lonentauscher, die Abtrennung von Basen über Durchleiten des Reaktionsgemisches über saure lonentauscher.

Nach der Aufreinigung ist das Reaktionsgemisch im Wesentlichen frei von Säuren, Basen und Lösungsmittel und kann als oder in Funktionsflüssigkeiten, bevorzugt Hydraulik- oder Bremsflüssigkeiten, sowie zum Abfangen von Wasser eingesetzt werden.

Für die angestrebte Verwendung kann es erforderlich sein, das Reaktionsgemisch mit weiteren typischen Additiven zu versetzen. Beispiele dafür sind Korrosionsinhibitoren, Antischaummittel, pH-Stabilisatoren oder Antioxidantien.

Es stellt einen Vorteil des erfindungsgemäßen beschriebenen Verfahrens dar, daß die Reaktionsgemische schonend erhalten werden können. Insbesondere sind die Reaktionsgemische frei von Halogeniden, besonders Chloriden, so daß die Reaktionsgemische eine geringere Korrosivität zeigen als die entsprechenden Verbindungen, die aus den korrespondierenden Alkyl chlorsilanen erhalten wurden. Der Gehalt an Halogeniden, besonders Chloriden, in den so erhaltenen Reaktionsgemischen beträgt in der Regel nicht mehr als 100 Gew.ppm, bevorzugt nicht mehr als 75, besonders bevorzugt nicht mehr als 50, ganz besonders bevorzugt nicht mehr als 25, insbesondere nicht mehr als 15 und sogar nicht mehr als 10 Gew.ppm.

## Patentansprüche

1. Verfahren zur Herstellung von organischen Siliziumverbindungen der Formel (III)
(III) R¹ₓSi(-[-O-CH₂-CH₂-]ₙ-O-R³)₄₋ₓ
oder deren Gemische,
in dem man mindestens ein Alkoxy alkyl silan der Formel (la)
(la) R¹ₓSi(OR²)₄₋ₓ
und/oder ein cyclisches Siloxan der Formel (Ib)
(Ib) -(-SiR¹₂-O-)_{y}-
mit mindestens einem Alkoxyalkanol der Formel (II)
(II) R³-O-[-CH₂-CH₂-O-]ₙ-H
in Gegenwart mindestens einer Säure oder mindestens einer Base,
optional in einem Lösungsmittel
bei einer Temperatur von 0 bis 200 °C
umsetzt,
worin
R¹ Phenyl oder C₁-C₄-Alkyl, bevorzugt C₁-C₄-Alkyl, besonders bevorzugt Methyl, Ethyl oder n-Butyl, ganz besonders bevorzugt Methyl oder Ethyl,
R² C₁-C₄-Alkyl, besonders bevorzugt Methyl, Ethyl oder n-Butyl, ganz besonders bevorzugt Methyl oder Ethyl,
R³ C₁-C₄-Alkyl, besonders bevorzugt Methyl, Ethyl oder n-Butyl,
x für eine positive ganze Zahl 1, 2 oder 3,
y für eine positive ganze Zahl 3 oder 4, bevorzugt 3, und
n für eine positive ganze Zahl von 1 bis 5, bevorzugt von 2 bis 4, besonders bevorzugt 2 oder 3 und ganz besonders bevorzugt 3
bedeuten.

2. Verfahren gemäß Anspruch 1, **dadurch gekennzeichnet, daß** man als Alkoxy alkyl silane der Formel (la) ausschließlich Verbindungen mit x = 2 einsetzt.

3. Verfahren gemäß Anspruch 1 oder 2, **dadurch gekennzeichnet, daß** man den mindestens einen Alkoxyalkanol der Formel (II) in einem molaren Verhältnis von mindestens 1 : 1 pro zu ersetzender Gruppe (R²O-) in der Verbindung der Formel (la) einsetzt, bevorzugt mindestens 1,1 : 1, besonders bevorzugt mindestens 1,2 : 1 bis 4 : 1, ganz besonders bevorzugt von mindestens 1,3 : 1 bis 3 : 1, insbesondere mindestens 1,5 : 1 bis 2 : 1.

4. Verfahren gemäß einem der vorstehenden Ansprüche, **dadurch gekennzeichnet, daß** das mindestens eine Lösungsmittel ausgewählt ist aus der Gruppe bestehend aus
- offenkettigen oder cyclischen Ethern,
- Alkanolen und
- Kohlenwasserstoffen.

5. Verfahren gemäß Anspruch 4, **dadurch gekennzeichnet, daß** es sich bei dem Lösungsmittel um ein Alkanol R²OH handelt.

6. Verfahren gemäß Anspruch 4, **dadurch gekennzeichnet, daß** es sich bei dem Lösungsmittel um einen Kohlenwasserstoff handelt, der unter den Reaktionsbedingungen als Schleppmittel für Wasser und/oder Alkanol R²OH wirkt.

7. Verfahren gemäß Anspruch 6, **dadurch gekennzeichnet, daß** es sich bei dem Kohlenwasserstoff um Cyclohexan, Methylcyclohexan, Benzol, Toluol, Xylol, Hexan oder Heptan handelt.

8. Verfahren gemäß einem der vorstehenden Ansprüche, **dadurch gekennzeichnet, daß** die Reaktion in Gegenwart mindestens einer Base durchgeführt wird, ausgewählt aus der Gruppe bestehend aus
- (Erd)alkalimetall oxiden oder -hydroxiden, bevorzugt Alkalimetall hydroxide,
- (Erd)alkalimetall carbonaten oder -hydrogencarbonaten
- Metall alkoholaten, bevorzugt Metall alkoholaten des Alkanols R²OH und
- tertiären Aminen.

9. Verfahren gemäß einem der Ansprüche 1 bis 7, **dadurch gekennzeichnet, daß** die Reaktion in Gegenwart mindestens einer Säure durchgeführt wird, ausgewählt aus der Gruppe bestehend aus
- anorganischen Mineralsäuren, bevorzugt Schwefelsäure,
- organische Sulfonsäuren, bevorzugt Alkyl- oder Arylsulfonsäuren und
- sauren lonentauschern.

10. Verfahren gemäß einem der vorstehenden Ansprüche, **dadurch gekennzeichnet, daß** im Reaktionsverlauf entstehende flüchtige Bestandteile sowie optional eingesetztes Lösungsmittel durch Anlegen eines Unterdrucks von mindestens 100 mbar unter Umgebungsdruck abgetrennt werden, bevorzugt der Unterdruck im Verlauf der Reaktion gesteigert wird.

11. Verfahren gemäß einem der vorstehenden Ansprüche, **dadurch gekennzeichnet, daß** im Reaktionsverlauf entstehende flüchtige Bestandteile sowie optional eingesetztes Lösungsmittel durch Strippen mit einem inerten Gas, bevorzugt durch Durchleiten durch das Reaktionsgemisch entfernt werden.

12. Verfahren gemäß einem der vorstehenden Ansprüche, **dadurch gekennzeichnet, daß** man die Reaktion in einem Reaktor mit aufgesetzter Rektifikationskolonne durchführt, deren Trennleistung ausreichend das Alkanol R²OH als Leichtsieder am Kolonnenkopf abzutrennen, und man die höher als Alkanol R²OH siedenden Komponenten in das Reaktionsgemisch, besonders die Edukte der Formeln (la) und/oder (Ib) als Kolonnenrücklauf in das Reaktionsgemisch zurückführt.

13. Verfahren gemäß Anspruch 12, **dadurch gekennzeichnet, daß** das Alkoxy alkyl silan der Formel (la) ausgewählt ist aus der Gruppe bestehend aus Dimethoxy dimethyl silan, Dimethoxy diethyl silan, Diethoxy dimethyl silan und Diethoxy diethyl silan.

14. Verfahren gemäß einem der vorstehenden Ansprüche, **dadurch gekennzeichnet, daß** der mindestens eine Alkoxyalkanol der Formel (II) in mehreren Portionen oder kontinuierlich während des Reaktionsverlaufs in die Reaktion eingebracht wird.

15. Verfahren gemäß einem der Ansprüche 1 bis 13, **dadurch gekennzeichnet, daß** die Ausgangsverbindungen der Formel (la) und/oder (Ib) in mehreren Portionen oder kontinuierlich während des Reaktionsverlaufs in den vorgelegten Alkoxyalkanol der Formel (II) eingebracht wird.

16. Verfahren gemäß einem der vorstehenden Ansprüche, **dadurch gekennzeichnet, daß** die Reaktionstemperatur im Verlauf der Reaktion gesteigert wird.

17. Verfahren gemäß einem der vorstehenden Ansprüche, **dadurch gekennzeichnet, daß** die mindestens eine Säure oder Base nach Beendigung der Reaktion abgetrennt wird durch mindestens einen der Aufreinigungsschritte ausgewählt aus der Gruppe bestehend aus
- Filtration,
- Membranfiltration,
- Umkehrosmose,
- Sorption an mindestens einem anorganischen Metalloxid oder Aktivkohle und
- Kontakt mit mindestens einem sauren, basischen oder gemischten lonentauscher.

18. Verfahren gemäß einem der vorstehenden Ansprüche, **dadurch gekennzeichnet, daß** ein Überschuß des mindestens einen Alkoxyalkanols der Formel (II) im Wesentlichen im Reaktionsgemisch belassen wird.

19. Verwendung eines Reaktionsgemischs, erhalten nach einem der vorstehenden Ansprüche als oder in Funktionsflüssigkeiten, bevorzugt Hydraulik- oder Bremsflüssigkeiten, sowie zum Abfangen von Wasser.
